# EUROPÄISCHE PATENTANMELDUNG

(11) **EP 3 825 794 A1**
(43) Veröffentlichungstag der Anmeldung: **26.05.2021**
(21) Anmeldenummer: 19210558.3
(22) Anmeldetag: 21.11.2019
(51) Int. Cl.: G05B 19/406

(54) **VERFAHREN FÜR DIE ÜBERWACHUNG UND/ODER VORHERSAGE VON BEARBEITUNGSPROZESSEN UND/ODER BEARBEITUNGSERGEBNISSEN**

(71) Anmelder: pro-micron GmbH, 87600 Kaufbeuren (DE)
(72) Erfinder: WUNDERLICH, Rainer, 87600 Kaufbeuren (DE); DIX, Martin, 09117 Chemnitz (DE); RIETZLER, Manfred, Bangkok 10120 (TH)
(74) Vertreter: Raffay & Fleck

(57) **Zusammenfassung**

Offenbart wird ein Verfahren für die Überwachung und/oder Vorhersage von Bearbeitungsprozessen und/oder Bearbeitungsergebnissen in der mittels einer mit vorgebbaren Betriebsparametern betreibbaren, wenigstens ein Bearbeitungswerkzeug aufweisenden Werkstückbearbeitungsmaschine erfolgenden maschinellen Werkstückbearbeitung. Die Überwachung und/oder Vorhersage erfolgt mittels eines Auswertealgorithmus, der mittels eines auf einem Computer ausgeführten Computerprogrammprodukts basierend auf Trainingsdatensätzen erhalten ist. Die Trainingsdatensätze umfassen als Trainingsdaten Einstellungsdaten betreffend die Einstellung von Betriebsparametern der Werkstückbearbeitungsmaschine für die Durchführung eines zu überwachenden und/oder vorherzusagenden Bearbeitungsprozesses. Sie umfassen weiterhin Ergebnisdaten von in einem zu überwachenden und/oder vorherzusagenden Bearbeitungsprozess fertig bearbeitenden Werktücken. Sie umfassen schließlich auch sensorisch ermittelte Zustandsdaten der Bearbeitungsmaschine während der Durchführung eines zu überwachenden und/oder vorherzusagenden Bearbeitungsprozesses.

In einer Nutzungsphase wird die aufwendige Erfassung der Ergebnisdaten durch basierend auf maschinell erlerntem Wissen getroffene Vorhersage vermieden oder bedarfsgerecht reduziert.

## Beschreibung

Die Erfindung betrifft ein Verfahren für die Überwachung und/oder Vorhersage von Bearbeitungsprozessen und/oder Bearbeitungsergebnissen in der mittels einer mit vorgebbaren Betriebsparametern betreibbaren, wenigstens ein Bearbeitungswerkzeug aufweisenden Werkstückbearbeitungsmaschine erfolgenden maschinellen Werkstückbearbeitung. Sie betrifft hierbei insbesondere solche Verfahren, die in Werkstückbearbeitungsmaschinen für eine Material trennende Bearbeitung, insbesondere für die spanende Bearbeitung, wie z.B. Fräsbearbeitung, Drehbearbeitung, Schleifbearbeitung oder Bohrbearbeitung, verwendet werden.

Für die nicht zuletzt aus Kosten-, aber auch aus Präzisionsgründen weitgehend automatisierte Bearbeitung von Werkstücken werden heute nicht nur komplexe und hochpräzise Werkstückbearbeitungsmaschinen eingesetzt, sondern es werden auch immer detailliertere und echtzeitnahe Überwachungen vorgesehen, in denen zum Beispiel mittels entsprechender Sensorik Prozessdaten des Werkstückbearbeitungsprozesses erfasst, gesammelt und für eine Auswertung zur Verfügung gestellt werden. Ein Beispiel für eine solche Möglichkeit ist der von der hiesigen Anmelderin unter dem Markennamen "SPIKE" am Markt angebotene sensorische Werkzeughalter, mittels dessen während eines Bearbeitungsprozesses, zum Beispiel in einer Fräsmaschine, auftretende, auf dem Werkzeug lastende Axialkräfte sowie Querkräfte bzw. Biegemomente erfasst werden können. Die so gewonnenen Daten können mittels einer von der hiesigen Anmelderin mit dem sensorischen Werkzeughalter zur Verfügung gestellten Auswertesoftware ausgewertet, insbesondere grafisch aufgezeigt, werden, um hieraus Rückschlüsse zu ziehen auf den Ablauf des Bearbeitungsprozesses und/oder einen Zustand des Werkzeugs. Diese Auswertung muss allerdings noch "manuell" durch einen erfahrenen Maschinenführer vorgenommen werden. Dieser kann dann, insbesondere in einem von der Auswertesoftware zur Verfügung gestellten Auftrag von Werten der x- und y-Komponenten erfasster Biegemomente in einem mit dem Werkzeughalter mitdrehenden Koordinatensystem zum Beispiel einen Schneidenverschleiß des eingesetzten Werkzeugs oder auch einen Schneidenbruch erkennen, welche die qualitätsgerechte Fertigung empfindlich stören.

Während mit dem sensorischen Werkzeughalter der Anmelderin bereits ein äußerst hilfreiches Mittel für die Datengewinnung in Bearbeitungsprozessen auf Werkstückbearbeitungsmaschinen zur Verfügung gestellt ist, die mögliche Auswertung der sensorisch ermittelten Kenngrößen (Axialkräften, Biegemomentkomponenten, bzw. Querkraftkomponenten), um daraus Rückschlüsse auf den Bearbeitungsprozess zu ziehen eine gute Möglichkeit der Prozessbeobachtung und damit auch der Werkstückbearbeitungsmaschinenführung darstellt, besteht gleichwohl ein Bedarf nach einer noch tiefergehenden Analyse des Werkstückbearbeitungsprozesses inklusive einer Möglichkeit der Vorhersage des Bearbeitungsergebnisses.

Diesem Bedarf widmet sich die vorliegende Erfindung, der die Aufgabe zugrunde liegt, ein Verfahren für die Überwachung und/oder Vorhersage von Bearbeitungsprozessen und/oder Bearbeitungsergebnissen in der mittels einer wenigstens ein Bearbeitungswerkzeug aufweisenden Werkstückbearbeitungsmaschine erfolgenden maschinellen Werkstückbearbeitung anzugeben, das weitergehende Aussagen über den Bearbeitungsprozess, den Zustand der Werkstückbearbeitungsmaschine und/oder das Ergebnis des Bearbeitungsprozesses, also einen definierten Bearbeitungszustand des Werkstückes, ermöglicht.

Diese Aufgabe wird erfindungsgemäß gelöst durch ein Verfahren mit den Merkmalen des Patentanspruchs 1. Vorteilhafte Weiterbildungen eines solchen Verfahrens sind in den abhängigen Ansprüchen 2 bis 17 angegeben.

Erfindungsgemäß erfolgt bei einem Verfahren die Überwachung und/oder Vorhersage von Bearbeitungsprozessen und/oder Bearbeitungsergebnissen in der mittels einer mit vorgebbaren Betriebsparametern betreibbaren, wenigstens ein Bearbeitungswerkzeug aufweisenden Werkstückbearbeitungsmaschine erfolgenden maschinellen Werkstückbearbeitung, bei der es sich insbesondere um eine Material trennende Bearbeitung, insbesondere eine spanende Bearbeitung, insbesondere eine spanende Formgebung, wie z.B. eine Fräsbearbeitung, eine Drehbearbeitung, eine Schleifbearbeitung oder eine Bohrbearbeitung, handeln kann, mittels eines Auswertealgorithmus. Der Auswertealgorithmus wird dabei mittels eines auf einem Computer ausgeführten Computerprogrammprodukts basierend auf Trainingsdatensätzen erhalten. Die Trainingsdatensätze umfassen erfindungsgemäß als Trainingsdaten Einstellungsdaten betreffend die Einstellung von Betriebsparametern der Werkstückbearbeitungsmaschine für die Durchführung eines zu überwachenden und/oder vorherzusagenden Bearbeitungsprozesses, Ergebnisdaten von in einem zu überwachenden und/oder vorherzusagenden Bearbeitungsprozess fertig bearbeiteten Werkstücken sowie sensorisch ermittelte Zustandsdaten der Bearbeitungsmaschine während der Durchführung eines zu überwachenden und/oder vorherzusagende Bearbeitungsprozesses.

Bei den Trainingsdaten in den Trainingsdatensätzen handelt es sich insoweit um "historische" Daten, die bekannte, bereits durchgeführte oder simulierte Bearbeitungsprozesse betreffen und basierend auf denen mittels des auf dem Computer ausgeführten Computerprogrammprodukts der Auswertealgorithmus erstellt wird. Typischerweise basiert die Erstellung des Auswertealgorithmus auf einer großen Zahl von Trainingsdaten bzw. Trainingsdatensätzen, wobei die Verarbeitung in dem Computerprogrammprodukt unter Einsatz von Methoden und Modellen der sogenannten künstlichen Intelligenz erfolgt. D. h., dass auf dem Computer ausgeführte Computerprogrammprodukt gestaltet und verbessert bzw. verfeinert den Auswertealgorithmus ausgehend von einer dem Computerprogrammprodukt vorgegebenen Vorgehensweise in einem eigenständigen Prozess, insbesondere durch sogenanntes maschinelles Lernen.

Eine solche Vorgehensweise erlaubt es, basierend auf einer Vielzahl von über den spezifischen Bearbeitungsprozesses gesammelten Daten eine exaktere Überwachung des Prozesses durchzuführen bzw. eine genauere Vorhersage auf das Bearbeitungsergebnis zu treffen, bzw. Abweichungen und Fehler in der Werkstückbearbeitungsmaschine und/oder in der Bearbeitung zu erkennen. So erlaubt eine solche Vorgehensweise zum Beispiel aufgrund der Datenmenge und -breite sowie des Auswertealgorithmus eine sehr gute Vorhersage von Größen des mit einem durchgeführten und in den überwachten Parametern beobachteten Bearbeitungsprozess fertig bearbeiteten Werkstücks, dessen Qualität und Einhaltung der Bearbeitungsvorgaben. So kann insbesondere anhand solcher Vorhersagen ein zutreffendes Qualitätsprotokoll für das bearbeitete Werkstück erstellt und dem Werkstück zugeordnet werden, was eine nachgelagerte Kontrolle und Vermessung des Werkstücks im Rahmen eines Qualitätskontrollprozesses ersetzen und eine solche Kontrolle überflüssig machen kann. Auf diese Weise lassen sich Zeit und kostspielige Ressourcen einsparen, ohne dass das Prüfen und Nachhalten der geforderten Qualität etwa leiden oder gar entfallen würde.

Ebenso lassen sich mit dem Verfahren mögliche Fehler in der Werkstückbearbeitungsmaschine oder in dem Bearbeitungsprozess, wie zum Beispiel ausgeschlagenen Lager von Werkstück- oder Werkzeugspindel, auftretende Unwuchten, ein verschlissenes oder gar gebrochenes Werkzeug oder auch eine unzureichende Aufspannung des Werkstücks oder eine fehlerhafte Aufnahme des Werkzeugs erkennen. Ebenso lassen sich für die Einrichtung eines Bearbeitungsvorganges durch Auswahl und Vorgabe der Kennwerte der einzustellenden Betriebsparameter der Werkstückbearbeitungsmaschine solche Einstellungen ermitteln, die eine maschinen- und werkstückschonende, präzise und zugleich im Durchsatz möglichst schnell abzuarbeitende Bearbeitung erlauben.

Für die Erstellung des Auswertealgorithmus werden in dem Computerprogrammprodukt zunächst bestimmte Operationen und Verknüpfungen vorgegeben und mehrere, insbesondere eine Vielzahl von Trainingsdatensätzen erzeugt, die dann in dem Computerprogrammprodukt, welches auf dem Computer ausgeführt wird, nach Maßgabe von vorgegebenen Modellen verarbeitet werden für eine Verbesserung und weitergehende Anpassung des Auswertealgorithmus, sodass dieser aus gewonnenen und ermittelten Daten, zum Beispiel basierend auf Einstellungsdaten und Zustandsdaten, eine Vorhersage auf z.B. die Ergebnisdaten ermöglicht. Die Trainingsdaten können dabei sowohl solche Daten sein, die in real durchgeführten Bearbeitungsprozessen ermittelt, respektive von den in diesen Bearbeitungsprozessen erhaltenen Werkstücken durch Vermessung entnommen worden sind. Sie können aber auch solche Daten sein, die aus Simulationen von Bearbeitungsprozessen gewonnen worden sind. Je mehr Trainingsdatensätze zugrunde gelegt werden mit insbesondere unterschiedlichen Parametereinstellungen und unterschiedlichen Bearbeitungsverläufen, zum Beispiel auch mit Fehlern in der Bearbeitungsmaschine, im Bearbeitungsvorgang und dergleichen, desto exakter wird der von dem auf dem Computer ausgeführten Computerprogrammprodukt erstellte Auswertealgorithmus und desto genauer können mit diesem Vorhersagen getroffen und Überwachungen des Bearbeitungsprozesses durchgeführt werden.

Die Methoden und Modellen, die in dem Computerprogrammprodukt als Rahmenvorgabe für das Erzeugen des Auswertealgorithmus basierend auf den Trainingsdatensätzen hinterlegt sind, können mit einem empirischen oder analytischen Verfahren und Vorgehensweisen erzeugt werden. Typischerweise werden hier Verallgemeinerungen von bestimmten Zusammenhängen, die als für das Verhalten der Werkstückbearbeitungsmaschine und/oder das im beobachteten Bearbeitungsprozess erhaltenen Arbeitsergebnis relevant erkannt worden sind, berücksichtigt und darauf basierend grundsätzliche Operationsanweisungen erstellt werden. Die Verarbeitung der Trainingsdaten und Trainingsdatensätze in dem auf dem Computer ablaufenden Computerprogrammprodukt kann dann mittels eines Näherungsverfahrens, insbesondere Deep Learning, Convolutional Neural Network (CNN), Recusive Nets (RNN), Stochastic Machine, Random Forest oder Support Vecture Machine, erfolgen zur Erzeugung des Auswertealgorithmus. Diese Näherungsverfahren betreffen verschiedene Optimierungsmethoden künstlicher neuronaler Netze, die zwischen einer Eingabeschicht und einer Ausgabeschicht eine Anzahl Zwischenlagen aufweisen und deren innere Struktur im Rahmen eines Trainings mit dem Trainingsdaten der Trainingsdatensätze ausgebildet werden können.

Hierbei kann insbesondere überwachtes Lernen und/oder bestärkendes Lernen (reinforcement learning) zum Einsatz kommen. Das Computerprogrammprodukt bzw. die Software des Computers kann dann die anhand der Trainingsdaten und Trainingsdatensätze deren Kategorien und Zusammenhänge erkennen. Bei dem überwachten Lernen kann ein Clustering-Verfahren angewandt werden.

Mit besonderem Vorteil kann ein geführtes Lernen zum Einsatz kommen, bei dem Expertenwissen über Bearbeitungsprozesse und das Verhalten von Zustandsdaten, Einstellungsdaten und Ergebnisdaten und deren wechselseitiger Einflussnahme mit in eine Ausgangseinrichtung der Vorgaben für den Auswertealgorithmus mit einfließen gelassen wird. So findet das Lernen nicht gleichermaßen blind statt, sondern eben gerade geführt anhand von Vorkenntnissen. Wenn z.B. auf ein Messgerät zur Erfassung von während der Bearbeitung auftretenden Kräften und Momenten zurückgegriffen wird, wie er durch die Anmelderin unter dem Markennahmen SPIKE® am Markt angeboten wird, so kann auf vorhandenes Wissen über in mit diesen Messgeräten aufgenommene Messdaten erkannte und aus diesen abgeleitete Zusammenhänge mit in die Lernvorgaben für die Verbesserung des Auswertealgorithmus mit einfließen, z.B. Wissen darüber, dass eine asymmetrischen Verteilung der Schnittkräfte pro Schneide bei einem an sich symmetrisch gebildeten Werkzeug einen Rückschluss auf einen Verschleiß des Werkzeuges zulässt. Entsprechendes Wissen kann z.B. mit Verfahren gewonnen sein, wie sie in der EP 2 829 259 A1, EP 2 924 526 A1 oder der EP 3 486 737 A1 beschrieben sind.

Bei der Eingabe des vorhandenen Expertenwissens findet insbesondere eine Vorauswertung, Datenfilterung und Datenstrukturierung statt, um die Daten für den weiterführenden Lernprozess aufzubereiten und die darin eingebetteten Informationen für den maschinellen Lernprozess verfügbar zu machen. Hierbei wird insbesondere bewusst nach Einstellungsdaten (ausgelesen oder eingegeben), d.h. Daten der Einstellung der Bearbeitungsmaschine für den Bearbeitungsprozess, während des Prozesses gewonnen Zustandsdaten und nach dem Prozess gewonnenen Ergebnisdaten unterschieden.

Entsprechendes Wissen über z.B. die Bedeutung derartiger Symmetriebetrachtungen werden also dem System als Eingangsgrößen eingegeben, um ein schnelleres und zielführenderes geführtes Lernen zu ermöglichen. Das hat auch den entscheidenden Vorteil, dass sehr viel weniger Trainingsdatensätze benötigt werden, da das System bereits bekanntes Wissen, das in die Grundeinrichtung eingeflossen ist, nicht noch einmal neu lernen muss. Gerade bei einer trennenden, insbesondere zerspanenden, Materialbearbeitung wäre ein freies Lernen ohne Vorgabe derartigen Expertenwissens nicht zielführend, würde zu keinem sinnvollen Ergebnis führen, da schlicht die Menge an relevanten zuzuordnenden Daten begrenzt ist und das System bei einem freien Lernen kaum genügend verwertbare Informationen über relevante Zusammenhänge erhält.

Die Einstellungsdaten können insbesondere Daten über die Art und/oder den Zustand eines vor dem Bearbeitungsprozesses eingesetzten und für die Durchführung des Bearbeitungsprozesses verwendeten Bearbeitungswerkzeugs der Bearbeitungsmaschine, Daten über eine eingestellte Drehzahl von Werkstück- und/oder Werkzeugspindel der Bearbeitungsmaschine, Daten über einen eingestellten Kühlmitteleintrag in einen Bearbeitungsbereich der Werkstückbearbeitungsmaschine und/oder Daten über Vorschubgeschwindigkeiten von Werkstück- und/oder Werkzeughaltern oder dergleichen umfassen. Grundsätzlich können als Einstellungsdaten sämtliche Daten Berücksichtigung finden, die die Einstellung der Werkstückbearbeitungsmaschine für den Betrieb während des Bearbeitungsprozesses bestimmen oder bedingen. Für die Bestimmung des Auswertealgorithmus kann in dem Computerprogrammprodukt, das auf dem Computer abläuft, eine Gewichtung der Relevanz einzelner der Einstellungsdaten erfolgen.

Die Ergebnisdaten können zum Beispiel Daten über die Oberflächenbeschaffenheit des fertig bearbeiteten Werkstücks und/oder über die Maßhaltigkeit der erzielten Bearbeitungsergebnisse im Verhältnis zu einer Ergebnisvorgabe, insbesondere die Toleranzhaltigkeit, umfassen. Auch hier können sämtliche für die Beurteilung des Bearbeitungsergebnisses relevanten Daten als Ergebnisdaten Verwendung finden als Bestandteil der Trainingsdaten und der damit gebildeten Trainingsdatensätze. Die Ergebnisdaten werden vorrangig für die Erstellung von Trainingsdatensätzen Berücksichtigung finden, sie werden im laufenden Betrieb und für die Durchführung der Überwachung typischerweise nicht, jedenfalls nicht fortwährend, erhoben und zugrunde gelegt, da ein Ziel des erfindungsgemäßen Verfahrens gerade darin besteht, die Ergebnisse der Bearbeitung des Werkstücks mit der Werkstückbearbeitungsmaschine, also letztlich die Ergebnisdaten zuverlässig vorherzusagen. Selbstverständlich kann allerdings im Zuge einer Überprüfung auch eine Ermittlung der Ergebnisdaten eines mit dem Verfahren überwachten Bearbeitungsprozesses durchgeführt werden, um darüber die Richtigkeit der getroffenen Vorhersage zu verifizieren und gegebenenfalls mit neuerlichen Trainingsdatensätzen ein weiteres Verbessern des Auswertealgorithmus zu erhalten.

Die Zustandsdaten können insbesondere Daten über während des Bearbeitungsprozesses auf das Werkstück und/oder das Werkzeug wirkende Kräfte und Momente, Daten betreffend eine Motorstromaufnahme von Antriebsmotoren der Bearbeitungsmaschine, zum Beispiel von Antriebsmotoren für die Rotation von Werkzeug- oder Werkstückspindel, Daten für Antriebsmotoren für den Vorschub von Werkzeug und/oder Werkstück, Temperaturdaten betreffend das Werkstück, das Werkzeug und/oder weitere Komponenten der Bearbeitungsmaschine, ermittelte Daten zu einem Kühlmitteleintrag in einen Bearbeitungsbereich, Daten zu einem Volumen und/oder einer Form des während des Bearbeitungsprozesses abgetrennten Materials und/oder Daten betreffend einen während der Bearbeitung erkannten Zustand eines Werkzeugs umfassen. Insofern Daten über während des Bearbeitungsprozesses auf das Werkstück und/oder das Werkzeug wirkende Kräfte und/oder Momente erfasst werden, so können diese auch nach räumlichen Komponenten in einem Bezugskoordinatensystem, z.B. in einem zu dem Werkstück, respektive dem Werkzeug ortsfesten Koordinatensystem, aufgeteilt erfasst werden, wobei dann eine zeitliche Relation dieser Komponenten ebenfalls mit aufgenommen werden wird, wie dies z.B. in der EP 2 924 526 A1 beschrieben ist. Für die Ermittlung solcher Zustandsdaten kann unterschiedliche und geeignete Sensorik verwendet werden, zum Beispiel ein mit Sensoren ausgestatteter Werkzeughalter, wie ihn die Anmelderin unter dem Markennamen "SPIKE" anbietet und vertreibt, sensorisch ausgerüstete Werkstückhalter, Messgeräte für den Motorstrom und dergleichen. Auch hier gilt wiederum, je vielfältiger die Datenerfassung, umso mehr Phänomene lassen sich erkennen, umso genauer kann der Auswertealgorithmus aus den Trainingsdatensätzen mittels maschinellen Lernens unter Anwendung des Prinzips der künstlichen Intelligenz gestaltet werden.

Die Auswertung kann während des Bearbeitungsprozesses *in situ* erfolgen, um somit in Echtzeit eine Prozessüberwachung zu erhalten. In einem solchen Fall kann insbesondere, wenn Probleme mit der Prozessführung, Fehler im Bearbeitungsprozesses oder Störungen und Fehler im Bereich der Werkstückbearbeitungsmaschine erkannt werden, ein Eingriff durch eine Steuerung der Werkstückbearbeitungsmaschine erfolgen, wenn dieser die Ergebnisse der Auswertung zugeführt werden und diese Steuerung basierend auf den Ergebnissen und entsprechend von Vorgaben, die auf den durch die Auswertung und Vorhersage aus den Trainingsdatensätzen beruhen, die Führungsgrößen für den Bearbeitungsprozess entsprechend anpasst, also Einstellungsveränderungen für die Einstellungsparameter der Werkstückbearbeitungsmaschine vornimmt, um so den Werkstückbearbeitungsprozess zu regeln. Erforderlichenfalls kann, wenn ein gravierender Fehler erkannt wird, die Bearbeitungsmaschine auch automatisch angehalten werden, kann, wenn ein Eingriff durch das Maschinenführungspersonal erforderlich ist, eine Fehlermeldung oder gar ein Alarm erfolgen. Sofern eine Auswertung in Echtzeit nicht möglich ist, so kann auch eine sehr zeitnahe Auswertung von Vorteil sein, da auch diese noch einen eventuellen Eingriff in den Prozess ermöglicht.

Auch ist es möglich, zeitnah eine Ausgabesignal zu erzeugen, wenn während der Bearbeitung eines Werkstücks von dem Auswertealgorithmus ein Problem oder eine Unregelmäßigkeit erkannt worden ist, um das Werkstück auszusondern und einer gesonderten Prüfung zu unterziehen oder auch als Ausschluss zu verwerfen.

Es ist aber ebenfalls denkbar, dass die Auswertung mittels des Auswertealgorithmus im Anschluss an den Bearbeitungsprozess vorgenommen wird in einem gesonderten Verfahrensschritt. Dies ermöglicht insbesondere auch die Berücksichtigung von solchen Daten, die nicht *in situ* bestimmt werden können, zum Beispiel Volumen und/oder Form von abgetrenntem Material, zum Beispiel von Spanmaterial in einem Fräsprozess oder in einem Bohrprozess. Sofern solche Daten mit einzubeziehen sind, um ein exaktes Ergebnisprotokoll im Hinblick auf die Ergebnisdaten des bearbeiteten Werkstücks zu erstellen, bietet sich eine solche Vorgehensweise an. Auch können hier Kombinationen erfolgen, d.h. eine Auswertung *in situ,* z.B. mit dem Ziel einer Prozessüberwachung, und eine Auswertung nach dem Bearbeitungsprozess für eine umfangreiche Beurteilung des Arbeitsergebnisses, insbesondere unter Gesichtspunkten der Qualitätsüberwachung.

Das erfindungsgemäße Verfahren kann insbesondere auch ausgeweitet werden in einer Anwendung für nicht lediglich eine isoliert betriebene Werkstückbearbeitungsmaschine, sondern auf eine Mehrzahl solcher Maschinen. Entsprechend können Trainingsdatensätze von mehreren Werkstückbearbeitungsmaschinen erfasst und an einen zentralen Speicher, zum Beispiel in eine Cloud, übermittelt werden und können aus den einzelnen Trainingsdatensätzen durch Verknüpfung Meta-Trainingsdatensätze ermittelt werden. Diese Meta-Trainingsdatensätze können wiederum einem Metadaten-Auswertungsalgorithmus zugeführt werden für eine vergleichende Auswertung eines Pools von Bearbeitungsmaschinen bzw. von auf diesen durchgeführten Bearbeitungsprozessen. Eine solche Vorgehensweise erlaubt zum Beispiel ein Erkennen von Abweichungen des jeweiligen Betriebs unterschiedlicher Werkstückbearbeitungsmaschinen und der sich daraus ergebenden Ergebnisse und ermöglicht somit wiederum eine noch genauere Optimierung der Auswertealgorithmen auf Basis solcher Trainingsdatensätze und Meta-Trainingsdatensätze.

Es ist auch möglich die Ergebnisse der getroffenen Vorhersage eines ersten Bearbeitungsergebnisses als Eingangsinformation (Führungsgröße) für einen nachfolgenden Bearbeitungsprozess zu verwenden. Mit anderen Worten kann ein mittels des zuvor beschriebenen Verfahrens für einen ersten Bearbeitungsprozes vorhergesagtes Bearbeitungsergebnis, wie z.B. eine Oberflächengüte eines in dem ersten Bearbeitungsprozess bearbeiteten Werkstücks, für einen nachfolgenden Bearbeitungsprozess als Eingangsgröße für dessen Steuerung bzw. Parametereinstellung herangezogen werden. Z.B. kann die vorhergesagte Rauheit einer Oberfläche des Werkstücks nach einem Schrupp-Prozess dazu verwendet werden, den Materialabtrag oder andere Prozessparameter eines nachfolgenden Schlichtprozesses zu steuern. Dies ermöglicht eine Erhöhung der Bearbeitungsgeschwindigkeit und/oder der Bearbeitungsgenauigkeit in aufeinanderfolgenden Bearbeitungsprozessen, die hier auch aus Bearbeitungsschritte bezeichnet werden können. Denn es ist möglich, ohne eine hierfür ansonsten erforderliche Messung, Informationen über einen Zwischenzustand des Werkstücks nach dem ersten Bearbeitungsprozess für die weitere Bearbeitung mit einfließen zu lassen und den nachfolgenden Bearbeitungsprozess entsprechend auf diese Daten und Informationen bezüglich des Ausgangszustandes anzupassen.

Nachfolgend werden anhand der beigefügten Figuren das erfindungsgemäße Verfahren und das zugehörige Vorgehen noch einmal näher erläutert. Dabei zeigen:
- Figur 1: in einem Schaubild eine Veranschaulichung des Lernprozesses zum Erhalt des Auswertealgorithmus anhand von Trainingsdatensätzen und unter Einsatz von künstlicher Intelligenz (KI) und
- Figur 2: in einem Schaubild eine Veranschaulichung des Einsatzes des mittels des Lernprozesses gewonnene Auswertealgorithmus für die Vorhersage von Bearbeitungsergebnissen.

In den Figuren ist das Vorgehen gemäß dem erfindungsgemäßen Verfahren und ist die Nutzung des mittels eines auf dem Einsatz von künstlicher Intelligenz (KI) basierenden maschinellen Lernprozesses gewonnenen Auswertealgorithmus für eine Vorhersage von Prozessergebnissen in der maschinellen Bearbeitung von Werkstücken, insbesondere der trennenden, vorzugsweise spanenden, Bearbeitung anhand von Beispielen veranschaulicht.

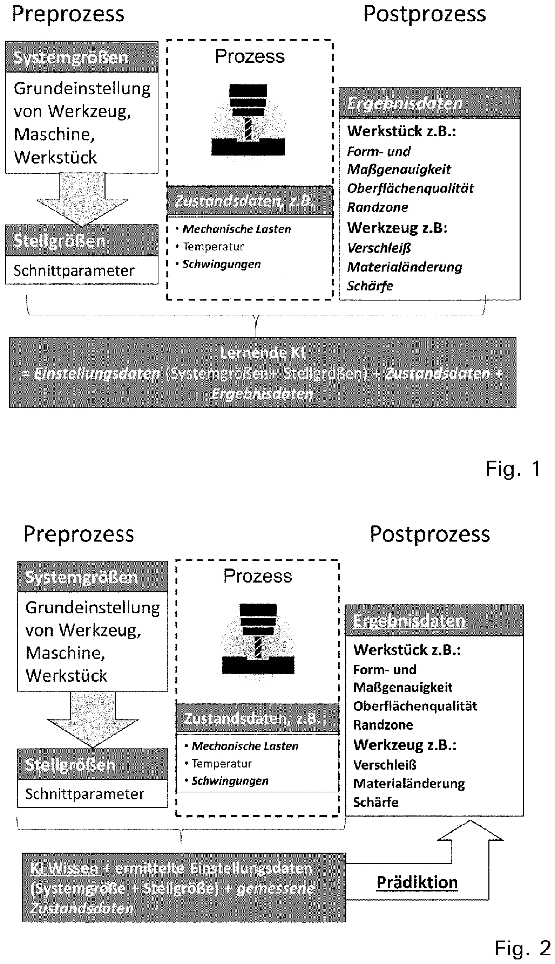

Zunächst wird, wie dies in Figur 1 dargestellt ist, im Rahmen einer Trainingsphase maschinelles Lernen und die Erstellung eines Auswertealgorithmus durchgeführt. Dies geschieht mittels eines auf einem Rechner ausgeführten Computerprogrammprodukts. Dabei werden dem Computerprogrammprodukt als Trainingsdatensätze korrelierte Daten bestehend aus Einstellungsdaten, dies sind die Grundeinstellungen der Bearbeitungsmaschine (hier auch Systemgrößen genannt) und die Einstellungen der Bearbeitungsmaschine im Prozess betreffende Daten (hier auch Stellgrößen genannt), Zustandsdaten, dies sind während des Prozessablaufs aufgenommene, den Prozessablauf betreffende Daten, wie z.B. erfasste mechanische Lasten, wie Kräfte und Momente, die z.B. am Werkzeug und/oder am Werkstück angreifen, eine Temperatur des Werkzeugs und/oder des Werkstücks, erfasste Schwingungen oder dergleichen, und Ergebnisdaten, dies sind z.B. Daten über das Bearbeitungsergebnis am Werkstück, wie z.B. Daten zur Form- und Maßgenauigkeit oder zur Oberflächenqualität, und auch Daten über einen Zustand des Werkzeugs nach dem Prozess, wie z.B. Verschleiß, Schneidenschärfe und dergleichen. Die Trainingsdatensätze umfassen dabei korreliert solche Einstellungsdaten, Zustandsdaten und Ergebnisdaten, die zu einem durchgeführten Bearbeitungsprozess gehören. Diese Trainingsdatensätze werden mittels KI ausgewertet und liegen dem maschinellen Lernen zugrunde, das letztlich einen Auswertealgorithmus für die Vorhersage und/oder Beurteilung von Bearbeitungsergebnissen formt und verfeinert. Dabei werden dem System für das maschinelle Lernen auch weitere Vorgaben aus vorhandenem Expertenwissen gemacht, das bereits bekannte Zusammenhänge zwischen Werten einzelner Trainingsdaten bzw. von Tendenzen der Trainingsdaten berücksichtigt. Auf diese Weise findet dann ein geführtes Lernen statt.

Die in dieser Lernphase eingegebenen Trainingsdaten und Trainingsdatensätze können aus real durchgeführten Bearbeitungsvorgängen gewonnen sein oder auch mittels Simulation erhalten.

Nach Abschluss der mittels KI durchlaufenen Lernphase, z.B. nach Anlernen mittels Trainingsdatensätzen für 100 verschiedene Bearbeitungsprozesse, kann dann der so gewonnenen Auswertealgorithmus als Wissen, sogenanntes KI-Wissen, eingesetzt werden, um nach Einlesen von Einstellungsdaten und Zustandsdaten eines real durchgeführten Bearbeitungsprozesses eine Vorhersage (Prädiktion) der Ergebnisdaten zu treffen. Dies ist in Figur 2 dargestellt.

## Patentansprüche

1. Verfahren für die Überwachung und/oder Vorhersage von Bearbeitungsprozessen und/oder Bearbeitungsergebnissen in der mittels einer mit vorgebbaren Betriebsparametern betreibbaren, wenigstens ein Bearbeitungswerkzeug aufweisenden Werkstückbearbeitungsmaschine erfolgenden maschinellen Werkstückbearbeitung, insbesondere einer Material abtrennenden Bearbeitung, insbesondere einer spanenden Bearbeitung, mittels eines Auswertealgorithmus,
• wobei der Auswertealgorithmus mittels eines auf einem Computer ausgeführten Computerprogrammprodukts basierend auf Trainingsdatensätzen erhalten ist,
• wobei die Trainingsdatensätze als Trainingsdaten folgende Daten umfassen:
• Einstellungsdaten betreffend die Einstellung von Betriebsparametern der Werkstückbearbeitungsmaschine für die Durchführung eines zu überwachenden und/oder vorherzusagenden Bearbeitungsprozesses,
• Ergebnisdaten von in einem zu überwachenden und/oder vorherzusagenden Bearbeitungsprozess fertig bearbeitenden Werktücken
• sowie sensorisch ermittelte Zustandsdaten der Bearbeitungsmaschine während der Durchführung eines zu überwachenden und/oder vorherzusagenden Bearbeitungsprozesses.

2. Verfahren nach Anspruch 1, **dadurch gekennzeichnet, dass** in einem ersten Schritt Trainingsdatensätze erzeugt werden und dass in einem zweiten Schritt die Trainingsdatensätze und/oder der auf Basis der Trainingsdatensätze erhaltene Auswertealgorithmus an eine Auswerteeinrichtung übermittelt werden.

3. Verfahren nach Anspruch 1, **dadurch gekennzeichnet, dass** die Trainingsdaten jedenfalls zum Teil aus früheren real durchgeführten Bearbeitungsprozessen real gewonnene Einstellungsdaten, Ergebnisdaten und/oder Zustandsdaten umfassen.

4. Verfahren nach einem der vorhergehenden Ansprüche, **dadurch gekennzeichnet, dass** der Auswertealgorithmus auf Basis der Trainingsdatensätze und unter Rückgriff auf geführtes Lernen erzeugt wird, bei dem Expertenwissen über Bearbeitungsprozesse und das Verhalten von Zustandsdaten, Einstellungsdaten und Ergebnisdaten und deren wechselseitiger Einflussnahme mit in eine anfängliche Einrichtung der Vorgaben für den Auswertealgorithmus mit einfließen gelassen wird.

5. Verfahren nach einem der vorhergehenden Ansprüche, **dadurch gekennzeichnet, dass** die Trainingsdaten jedenfalls zum Teil aus simulierten Bearbeitungsprozessen gewonnene Einstellungsdaten, Ergebnisdaten und/oder Zustandsdaten umfassen.

6. Verfahren nach einem der vorhergehenden Ansprüche, **dadurch gekennzeichnet, dass** der Auswertealgorithmus auf Basis der Trainingsdatensätze und unter Rückgriff auf ein Näherungsverfahren, insbesondere Deep Learning, Convolutional Neural Network (CNN), Recursive Nets (RNN, Stochastic Machine, Random Forest oder Support Vector Machine, erzeugt wird.

7. Verfahren nach einem der vorhergehenden Ansprüche, **dadurch gekennzeichnet, dass** der Auswertealgorithmus auf Basis der Trainingsdatensätze und unter Rückgriff auf überwachtes Lernen und/oder bestärkendes Lernen erzeugt wird.

8. Verfahren nach einem der vorhergehenden Ansprüche, **dadurch gekennzeichnet, dass** die Einstellungsdaten Daten über die Art und/oder den Zustand eines Bearbeitungswerkzeuges der Bearbeitungsmaschine, Daten über eingestellte Drehzahlen von Werkstück- und/oder Werkzeugspindeln der Bearbeitungsmaschine, Daten über einen eingestellten Kühlmitteleintrag in einen Bearbeitungsbereich und/oder Daten über Vorschubgeschwindigkeiten von Werkstück- und/oder Werkzeughaltern umfassen.

9. Verfahren nach einem der vorhergehenden Ansprüche, **dadurch gekennzeichnet, dass** die Ergebnisdaten Daten über die Oberflächenbeschaffenheit des fertig bearbeiteten Werkstücks und/oder über die Maßhaltigkeit der erzielten Bearbeitungsergebnisse im Verhältnis zu einer Ergebnisvorgabe umfassen.

10. Verfahren nach einem der vorhergehenden Ansprüche, **dadurch gekennzeichnet, dass** die Zustandsdaten Daten über während des Bearbeitungsprozesses auf das Werkstück und/oder das Werkzeug wirkende Kräfte und Momente, Daten betreffend eine Motorstromaufnahme von Antriebsmotoren der Bearbeitungsmaschine, Temperaturdaten betreffend das Werkstück, das Werkzeug und/oder weitere Komponenten der Bearbeitungsmaschine, ermittelte Daten zu einem Kühlmitteleintrag in einen Bearbeitungsbereich, Daten zu einem Volumen und/oder einer Form des während des Bearbeitungsprozesses abgetragenen Materials und/oder Daten betreffend einen während der Bearbeitung erkannten Zustand eines Werkzeuges umfassen.

11. Verfahren nach einem der vorhergehenden Ansprüche, **dadurch gekennzeichnet, dass** zu einem durchgeführten Bearbeitungsprozess ermittelte Einstellungsdaten, Ergebnisdaten und/oder Zustandsdaten als Trainingsdaten verwendet werden, um die Trainingsdatensätze zu ergänzen und/oder zu ersetzen, um so den Auswertealgorithmus anzupassen.

12. Verfahren nach einem der vorhergehenden Ansprüche, **dadurch gekennzeichnet, dass** die mit dem Auswertealgorithmus erhaltenen Ergebnisse in Bezug auf eine Vorhersage der erhaltenen Ergebnisdaten verwendet werden für eine Überwachung der Bearbeitungsergebnisse, insbesondere im Hinblick auf eine Qualitätskontrolle.

13. Verfahren nach einem der vorhergehenden Ansprüche, **dadurch gekennzeichnet, dass** die mit dem Auswertealgorithmus erhaltenen Ergebnisse in Bezug auf eine Überwachung des Bearbeitungsprozesses verwendet werden für ein Erkennen eines Fehlers der Werkstückbearbeitungsmaschine, eines Werkzeugverschleißes und/oder Werkzeugschadens und/oder zum Erkennen eines Fehlers in der Bearbeitung verwendet werden.

14. Verfahren nach einem der vorhergehenden Ansprüche, **dadurch gekennzeichnet, dass** die Auswertung mittels des Auswertealgorithmus in situ während des Bearbeitungsprozesses erfolgt.

15. Verfahren nach Anspruch 14, **dadurch gekennzeichnet, dass** die Ergebnisse der Auswertung einer Steuerung der Werkstückbearbeitungsmaschine zugeführt werden zur Anpassung von Führungsgrößen für den Bearbeitungsprozess.

16. Verfahren nach einem der Ansprüche 1 bis 13, **dadurch gekennzeichnet, dass** die Auswertung mittels des Auswertealgorithmus im Anschluss an den Bearbeitungsprozess erfolgt.

17. Verfahren nach einem der vorhergehenden Ansprüche, **dadurch gekennzeichnet, dass** im Betrieb von mehreren Werkstückbearbeitungsmaschinen erhaltene, bzw. angepasste Trainingsdatensätze an einen zentralen Speicher übermittelt und dass aus den einzelnen Trainingsdatensätzen durch Verknüpfung Meta-Trainingsdatensätze ermittelt werden.

18. Verfahren nach Anspruch 17, **dadurch gekennzeichnet, dass** die Meta-Trainingsdatensätze einem Metadaten-Auswertealgorithmus zugeführt werden für eine vergleichende Auswertung.

19. Verwendung von mittels eines Verfahrens nach einem der vorhergehenden Ansprüche erhaltenen Vorhersagen über ein Bearbeitungsergebnis eines ersten Bearbeitungsprozesses als Eingangsgröße für einen an einem in dem ersten Bearbeitungsprozess bearbeiteten Werkstück durchzuführenden, nachfolgenden Bearbeitungsprozess.
